# EUROPEAN PATENT APPLICATION

(11) **EP 2 292 709 A2**
(43) Date of publication of application: **09.03.2011**
(21) Application number: 10173479.6
(22) Date of filing: 20.08.2010
(51) Int. Cl.: C09J 5/00, B29C 65/54, B62D 27/02, F16B 11/00, F01D 5/28, B23K 1/20, B23K 20/00, B32B 7/12

(54) **Bonded assemblies and methods for improving bond strength of a joint**

(30) Priority: 08.09.2009 US 555633
(71) Applicant: Honeywell International Inc., Morristown, NJ 07962 (US)
(72) Inventor: Gage, Raymond, Morristown, NJ 07962-2245 (US); Allan, Adrian, Morristown, NJ 07962-2245 (US)
(74) Representative: Buckley, Guy Julian

(57) **Abstract**

Bonded assemblies and methods for improving the bond strength of a joint are provided. The joint may be formed between bonding surfaces of a first and a second component. The first component has a bonding surface adapted to be bonded to a bonding surface of a second component. A plurality of features may be formed in at least one of the bonding surfaces. The bonding surfaces are bonded together to form the joint. A bonding material layer between the bonding surfaces may form the joint or the first and second components may be co-cured to form the joint. A chemical and mechanical bond between the bonding surfaces is formed with the plurality of features forming the mechanical bond and increasing the bond area of the chemical bond. The features may be openings and/or protrusions such as holes, slots, and bosses.

## Description

### TECHNICAL FIELD

The present invention relates to bonded assemblies and methods for joint formation, and more particularly, to strengthened bonded assemblies and methods for improving bond strength in a joint.

### BACKGROUND

There are many applications and systems which involve the bonding of two or more components made of similar or dissimilar materials. The problems which are inherent in forming a joint between dissimilar materials are well known to those skilled in the art. In general, dissimilar materials, such as for example, a composite material and a metal material, often do not form good bonds with each other. The joints formed may be unsatisfactory. For example, in high performance products, a metallic material may be bonded to the surface of a composite. Composite materials have gained popularity in high-performance products that need to be lightweight, yet strong enough to withstand harsh loading and environmental conditions. Such high-performance products include aerospace components (tails, wings, fuselages, propellers, and fan blades), boat and scull hulls, kayaks, bicycle frames and automotive products as well as many other uses. Carbon fiber reinforced plastic is one such composite material but there are many types, typically comprised of reinforcing fibers in a resin matrix and referred to as fiber reinforced plastic.

One example of a part or component comprised of composite material is an airfoil of a gas turbine fan rotor, stator blade, or a propeller blade for an aircraft or wind turbine. A thin protective formed metallic sheet may be bonded to the leading edge of such a composite airfoil. However, such leading edges are subject to often severe environmental conditions such as erosion and foreign object damage which can lead to premature failure of the bondline, undesirably causing the joined components to separate.

Current bonding techniques typically involve elaborate surface preparation, however, they do not always work well with material combinations across different joint types and may not be able to withstand various loading and environmental factors without incurring unnecessary weight and cost. Moreover, the geometry of the components themselves may not provide adequate surface area to provide a good bond.

Accordingly, it is desirable to produce a strong and durable joint with a bond strength that can withstand various loading and environmental factors without incurring unnecessary weight and cost. In addition, it is desirable to produce a strong and durable joint with material combinations across different joint types as well as between similar materials in order to improve the dynamic life of a joint. Furthermore, other desirable features and characteristics of the present invention will become apparent from the subsequent detailed description of the invention and the appended claims, taken in conjunction with the accompanying drawings and this background of the invention.

### BRIEF SUMMARY

The present invention provides strengthened bonded assemblies and methods for improving the bond strength of a joint. In one embodiment, and by way of example only, a method for improving the bond strength of a joint between bonding surfaces of a first and a second component is disclosed. A first component may be provided having a bonding surface adapted to be bonded to a bonding surface of a second component. A plurality of features is formed in at least one of the bonding surfaces. The plurality of features may project or recede from the bonding surface. A bonding material layer is applied between the bonding surfaces and into the receded plurality of features and/or around the plurality of features to form a chemical and mechanical bond improving the strength of the joint between the components.

In accordance with another exemplary embodiment, an uncured fiber-reinforced composite material such as a prepreg may be applied over at least the bonding surface of the first component to form the second component comprised of the fiber-reinforced composite material which is then cured to form a co-cured joint. In this example, a separate bonding material layer is not necessary to form the co-cured joint.

Other independent features and advantages of the preferred embodiments will become apparent from the following detailed description, taken in conjunction with the accompanying drawings which illustrate, by way of example, the principles of the invention.

### BRIEF DESCRIPTION OF THE DRAWINGS

The present invention will hereinafter be described in conjunction with the following drawing figures, wherein like numerals denote like elements, and

FIG. 1 is a perspective view of a bonded assembly having an improved joint between a first and a second component with a plurality of openings extending through the first component and a bonding material layer between a bonding surface of the first component and a bonding surface of the second component which substantially fills the plurality of openings to improve the bond strength of the joint, in accordance with exemplary embodiments of the present invention;

FIG. 2 is a partial perspective view of the first component of FIG. 1;

FIG. 3 is a cross-sectional view of the improved joint of FIG. 1, illustrating the plurality of openings through the first component;

FIG. 4 is an alternate cross-sectional view of the joint of FIG. 1, illustrating the plurality of openings having an undercut portion;

FIG. 5 is an enlarged perspective view of the joint of FIG. 1, illustrating the bonding material layer interposed between the bonding surfaces of the first and second components with the bonding material received in the plurality of openings;

FIG. 6 is a cross-sectional view of an alternate joint with a plurality of bosses having an undercut portion formed in the bonding surface of the first component and the bonding material layer interposed between the bonding surfaces of the first and second components and between and around the plurality of bosses to improve the bond strength of the joint, in accordance with exemplary embodiments of the present invention;

FIG. 7 is an isometric view of a first component comprised of a metal sheet having first and second bonding surfaces with a plurality of undercut bosses formed therein and adapted to wrap around and be bonded to a leading edge of a composite airfoil (not shown in FIG. 7);

FIG. 8 is an enlarged view of a portion of the metal sheet of FIG. 7;

FIG. 9 is a cross section view of a composite airfoil with a metal sheet wrapped around and bonded to a leading edge of the composite airfoil with a bonding material between the bonding surfaces and received in the plurality of openings;

FIG. 10 is a cross-sectional view of a joint between a first component and a second component with a plurality of undercut bosses formed in the bonding surfaces thereof with a bonding material layer between the bonding surfaces and around the plurality of undercut bosses to improve the bond strength of the joint, in accordance with exemplary embodiments of the present invention;

FIG. 11 is a cross-sectional view of an interlocking joint between a first component and a second component with a plurality of undercut bosses formed in a bonding surface of the first component and a plurality of cooperating openings in the bonding surface of the second component and a bonding material layer between the bonding surfaces to improve the bond strength of the interlocking joint, in accordance with exemplary embodiments of the present invention;

FIG. 12 is a perspective view of a first component having a form other than a metal sheet with a plurality of openings formed in the bonding surface thereof;

FIG. 13 is a cross-sectional view of a co-cured joint between a first component and a second component with a plurality of undercut bosses in a bonding surface of the first component, in accordance with exemplary embodiments of the present invention;

FIG. 14 is a cross-sectional view of a co-cured joint similar to FIG. 13 with the first component in a form other than metal sheet form; and

FIG. 15 is a cross section view of the composite airfoil of FIG. 9 with the metal sheet of FIGS. 7 and 8 wrapped around the leading edge of the composite airfoil and the bonding surfaces co-cured.

### DETAILED DESCRIPTION OF THE INVENTION

The following detailed description of the invention is merely exemplary in nature and is not intended to limit the invention or the application and uses of the invention. Furthermore, there is no intention to be bound by any theory presented in the preceding background of the invention or the following detailed description of the invention.

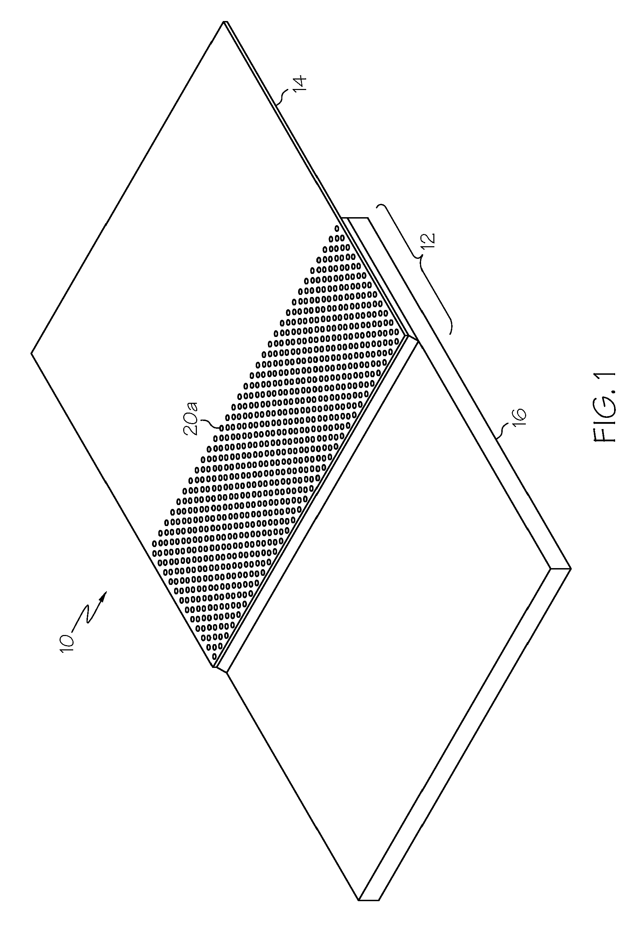

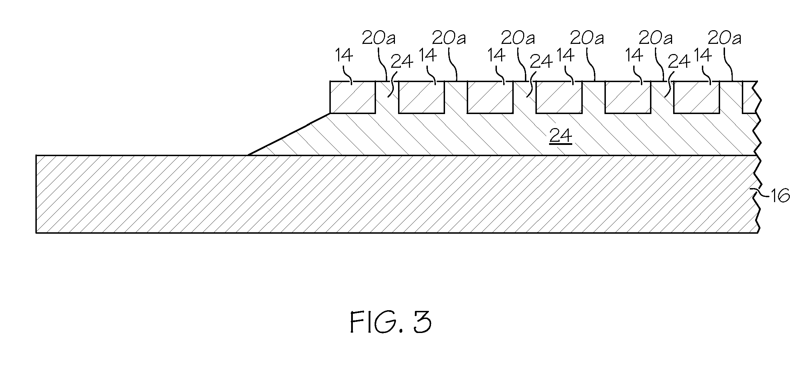

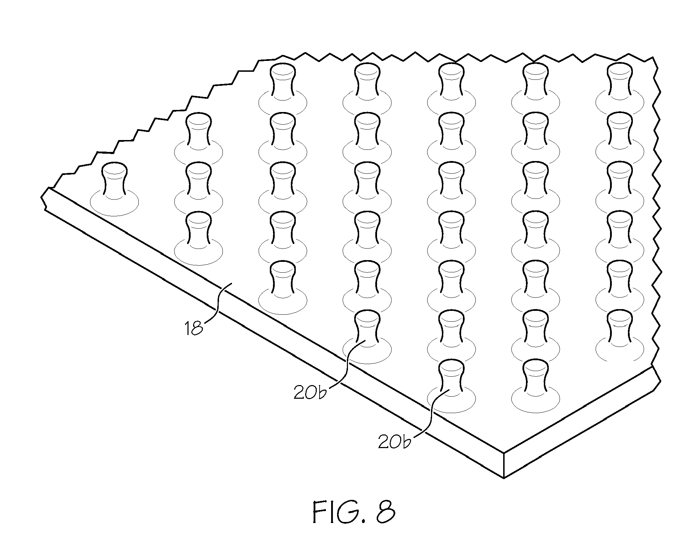

FIGS. 1-15 illustrate methods in accordance with exemplary embodiments of the present invention for improving the bond strength of a joint in a bonded assembly 10 between two or more components each having at least one bonding surface. Such embodiments include the formation of a plurality of features in a bonding surface of at least one of the components and bonding the respective bonding surfaces together with a bonding material or by co-curing the components.

Referring to FIGS. 1-5, in accordance with an exemplary embodiment of the present invention, a method for improving the bond strength of a joint 12 includes the step of providing at least a first and a second component 14 and 16 each having at least one bonding surface 18. In the embodiments depicted in FIGS. 1-5, the first component 14 comprises a metal sheet and the second component 16 comprises a composite sheet.

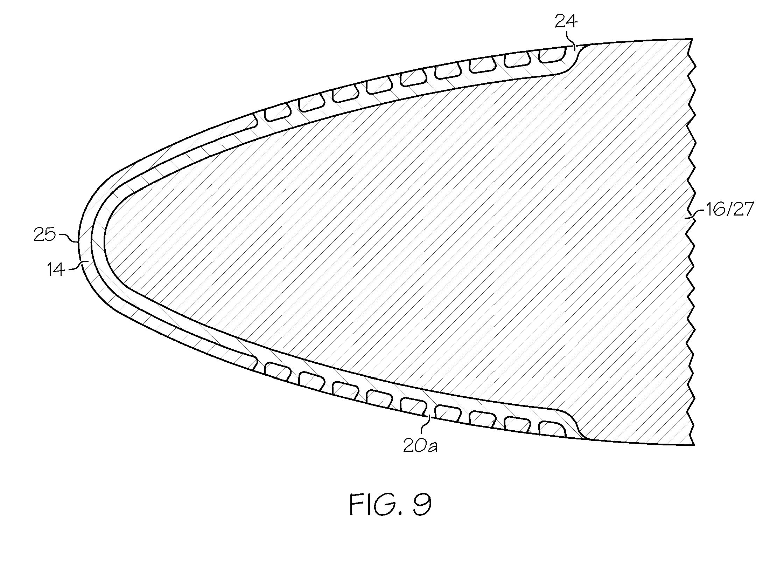

Before proceeding further, it is noted that the components may each be comprised of any material such as but not limited to of any metal, composite, plastic, or ceramic material, or a combination thereof, that can be bonded to other materials such as, but not limited to, any metal, composite, plastic, or ceramic and combinations thereof. The bonding may be between components made of similar or dissimilar materials. As used herein, the term "component" refers to the material in any form. For example, the components can have a substantially rectangular form and shape (see, e.g. FIGS. 1-8, 10-11, and 13), or other form and geometric shape (see, e.g. FIGS. 9, 14 and 15) as appropriate to the part into which the material is to be finally formed. By way of example only, the components may also be in foil, plate, bar, tube and other forms. While the various embodiments may particularly refer to a particular joint type and a first and second component, it will be understood that the invention is not so limited. By way of example only, and not intended to be limiting, the bond strength of butt joints, pin joints, "doubler" joints, tube and socket joints, joggle joints, and the like may be improved and there may be more than two components per joint.

Returning once again to the description, and with continued reference to FIGS. 1-5, the bonding surface 18 of the first component 14 is adapted to be bonded to the bonding surface 18 of the second component 16. A plurality of features 20a and 20b or the like is formed in the bonding surface 18 of at least one of the components 14 and 16 to increase the bonding surface area. The plurality of features may be formed in the bonding surface 18 of the first component 14, in the bonding surface 18 of the second component 16, or in the bonding surface 18 of both the first and second components 14 and 16. In the embodiment depicted in FIGS. 1-5, the plurality of features is in the bonding surface 18 of the first component 14.

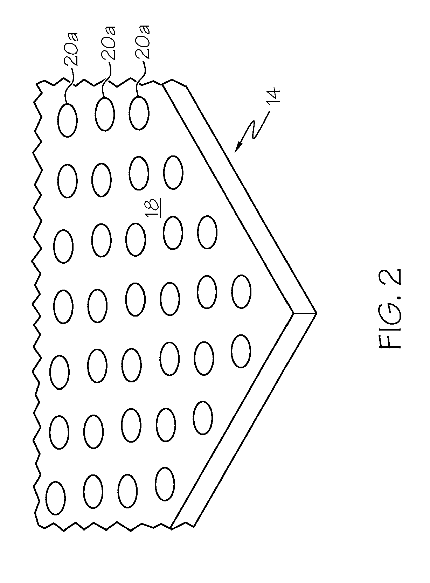

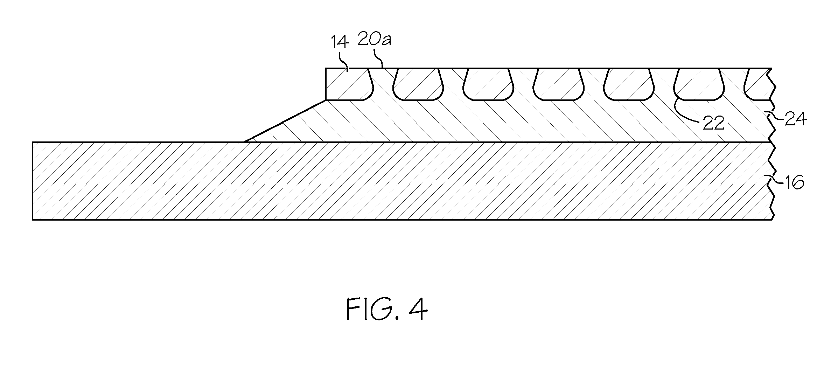

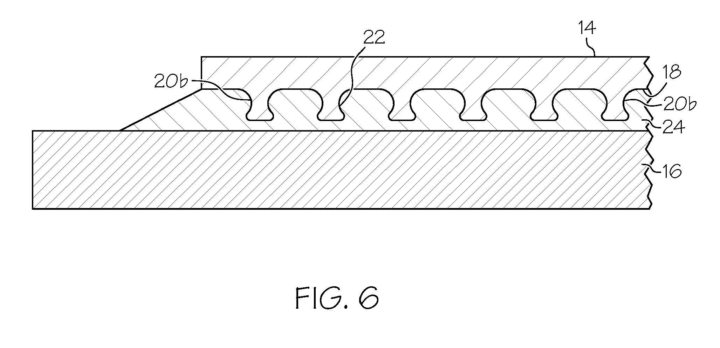

No matter where the plurality of features is formed, it will be appreciated that the plurality of features may be variously configured. For example, the plurality of features may comprise a plurality of openings (20a), protrusions (20b), or recesses (not shown) or the like, or a combination thereof. If the features comprise openings, the openings may comprise through holes, as shown most clearly in FIG. 2, blind holes, slots, or the like. If the features comprise openings 20a or recesses, the openings or recesses preferably recede from the bonding surface 18 of the component(s), and are suitably deep and wide to enable sufficient bonding material to be received therein. If configured as protrusions 20b, the protrusions project from the bonding surface 18 of the component(s). The protrusions 20b may comprise bosses, or pins, or the like as shown, for example, in FIGS. 6-8. Whether the features comprise openings, recesses or protrusions, the plurality of features may, at least in some embodiments, include an undercut portion 22 (see, e.g. FIG. 4 showing "undercut openings" as referred to herein).

The plurality of features may be integrally formed during component formation or after component formation by known methods. Such methods include laser drilling, electrical discharge machining (EDM), electrochemical machining (ECM), chemical etching, photolithography or a combination thereof, or the like. The plurality of features may be formed randomly or in repeating or non-repeating patterns. The type, density and size of the plurality of features in the bonding surface(s) 18 depends, for example, on the size of the component, the criticality of the bond (i.e. how well a joint failure can be tolerated), and the cost of forming such plurality of features. The depth and width of each feature have dimensions approximately within about two orders of magnitude of the bond layer thickness. However, it is to be appreciated that the size dimensions of each feature are not so limited.

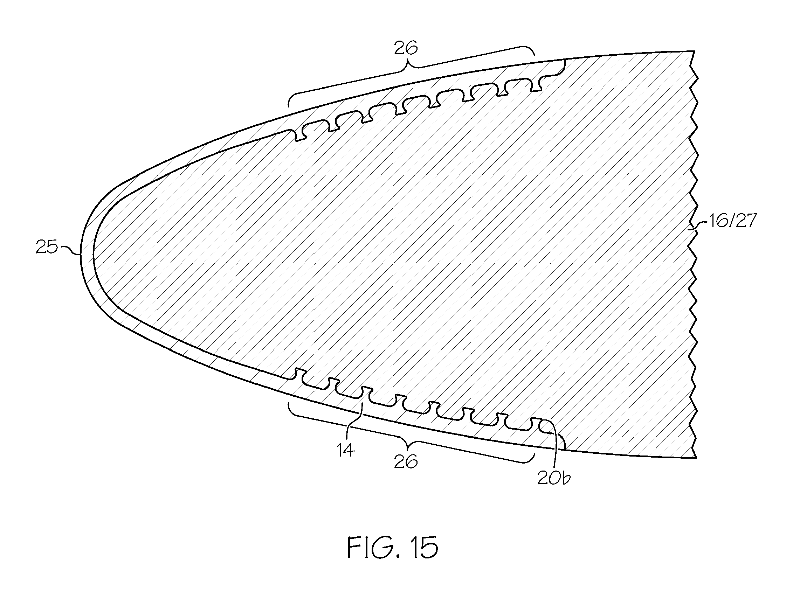

The features are distributed in at least a portion of the bonding surfaces. In a preferred embodiment as shown in FIG. 1, the features are shown distributed substantially throughout the bonding surface (about 100% distributed). In FIGS. 9 and 15, the features are distributed primarily in a flank portion of the bond and not on the nose portion (over the leading edge of a composite airfoil, for example) of the bond. A large number of features is envisioned so as to partially or fully populate a given surface area for a given feature size and spacing.

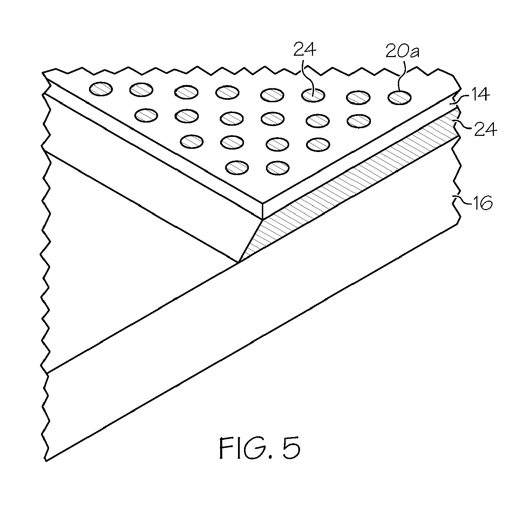

A method for improving the bond strength of a joint 12 further includes the step of forming a chemical and mechanical bond between the bonding surfaces 18. In a particular preferred embodiment, this is accomplished by applying a bonding material between the respective bonding surfaces 18 and pressing the bonding surfaces 18 together. In those embodiments in which the plurality of features comprise openings 20a or recesses, this causes the bonding material to flow into the plurality of openings (See FIG. 5) or recesses and form a bonding material layer 24 between the bonding surfaces 18 of the components 14 and 16. The bonding material substantially fills the plurality of openings 20a or recesses.

The bonding material may be an adhesive such as an epoxy, urethane, acrylic, or the like as well known in the art. The choice of bonding material depends, for example, on the material of the components 14 and 16 to be bonded. While the various embodiments particularly refer to an adhesive bonding material, it will be understood that the invention is not so limited. For example, depending on the material of the components to be bonded, bonding materials may be comprised of metallic bonding materials (brazed or soldered joining), ceramic bonding materials (a fired material), or any other material acting as a bonding medium between components.

As was noted above, a chemical bond as well as a mechanical bond can be formed between the components to improve the bond strength of the joint 12 between the components 14 and 16. The geometry of the plurality of features in the bonding surface(s) 18 forms the mechanical bond. As less overlapping material is needed to form a strong bond, the size of the components 14 and 16 and the amount of component material needed to form a strong and durable joint 12 may be reduced.

Referring to FIGS. 6-8, an exemplary embodiment in which the plurality of features comprises a plurality of protrusions 20b is depicted. Each of the plurality of protrusions 20b, at least in the depicted embodiment is implemented as a boss that includes the undercut portion 22. As such, these protrusions 20b are hereinafter referred to as "undercut bosses." It will be appreciated that in other embodiments the protrusions 20b could be implemented without the undercut portion 22, and could also be configured as other types of protrusions, as was previously noted. When the bonding surfaces 18 are pressed together with the bonding material between the bonding surfaces 18, the bonding material fills in the space between the bonding surfaces 18. As used herein, filling into the space between the bonding surfaces includes around the plurality of protrusions 20b. This improves the bond strength of the joint between the first and second components.

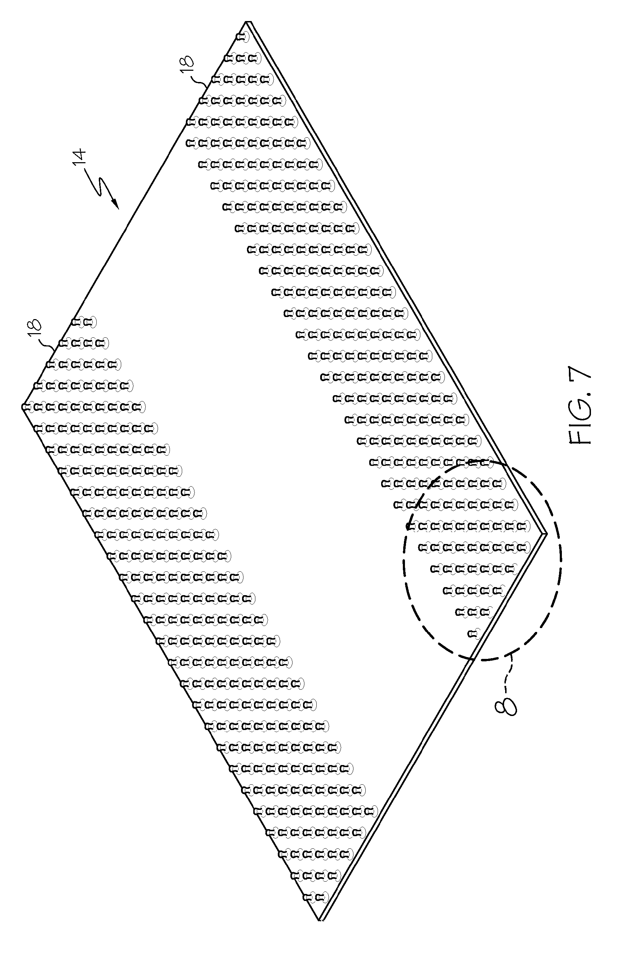

In the embodiment depicted in FIGS. 7-8, the first component 14 comprises a metal sheet having two bonding surfaces 18.

FIG. 9 illustrates a composite airfoil 27 having a metallic leading edge 25 formed from bonding a first component 14 comprised of a metal sheet to the leading edge of the composite airfoil (the second component 16). The first component 14 has two bonding surfaces similar to that shown in FIGS. 7-8. However, rather than each of the features being implemented as bosses, each is implemented as openings 20a. Bonding material may be applied and pressed between at least the two bonding surfaces 18 of the first component 14 and the bonding surface (in this case the leading edge) of the composite airfoil to provide metallic leading edge protection to the composite airfoil. The bonding material flows between the bonding surfaces, including receipt into the plurality of openings 20a to provide a bonding material layer 24 between the bonding surfaces 18 and a chemical and mechanical bond to improve the bond strength of the joint between the first and second components. While the undercut openings are shown in the metal sheet, it will be understood that the features may also or alternatively be formed in the bonding surface(s) of the composite airfoil.

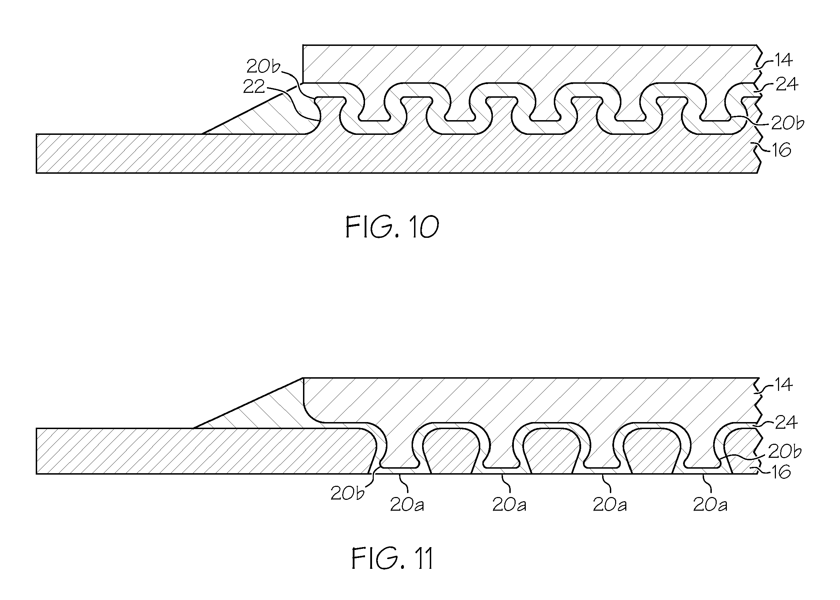

Referring to FIGS. 10-11, in accordance with yet another exemplary embodiment, the plurality of features may be formed in the bonding surfaces 18 of both of the first and second components 14 and 16. FIG. 10 illustrates a plurality of undercut bosses on the bonding surfaces 18 of both of the first and second components. FIG. 11 illustrates a plurality of undercut bosses on the bonding surface 18 of the first component 14 interlocking with a plurality of cooperating undercut openings 20a in the bonding surface 18 of the second component 16. In both embodiments, the bonding material forms the bonding material layer 24 between the respective bonding surfaces 18, and in the plurality of undercut openings and around the plurality of undercut bosses to provide both a chemical and mechanical bond. While the plurality of openings 20a in FIG. 11 extends from the bonding surface 18 of the second component 16 to the opposing surface thereof, the invention is not so limited. The depth and width of the plurality of openings (or recesses) should be such that sufficient bonding material may be received therein to form a strong and durable bond as previously described.

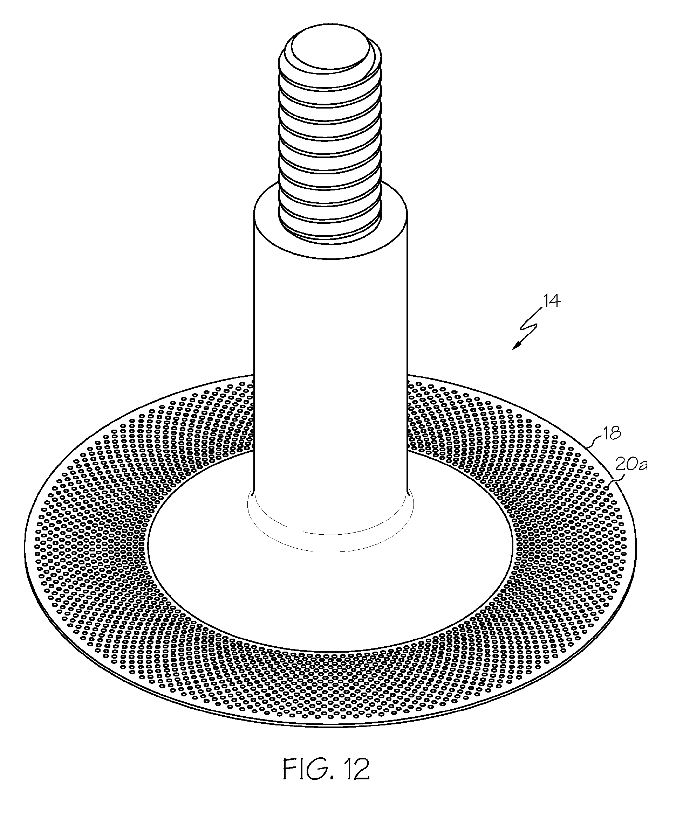

FIG. 12 illustrates an embodiment in which the first component 14 has a form other than a metal sheet. The plurality of features, in the form of through holes, is formed in the bonding surface 18 of the first component 14. The first component is adapted to be bonded to a second component (not shown in FIG. 12).

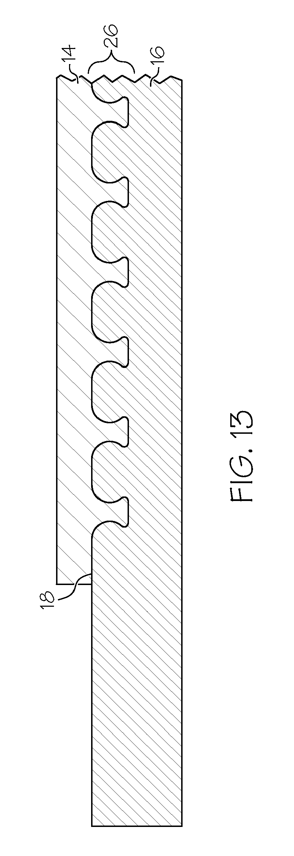

Referring to FIGS. 13-15, in an alternative embodiment, in which one or both of the components 14, 16 is comprised of a fiber-reinforced composite material, a co-cured joint 26 is formed during a co-curing process. "Co-curing" as used herein means the act of curing a composite and simultaneously bonding it to a bonding surface 18 of the other component. Co-curing is a process well known to those skilled in the art. The bonding step comprises depositing a fiber-reinforced composite material over at least the bonding surface 18 of the first component 14 to form the second component 16 comprised of the fiber-reinforced composite material. The fiber-reinforced composite material is then cured to form the co-cured joint 26 with a chemical and mechanical bond between the first and second components 14 and 16.

During the co-curing process, the composite fibers in an epoxy matrix will flow in and around the plurality of features improving the bond strength of the co-cured joint between the components. The composite materials may have similar or dissimilar composite fiber.

FIG.13 illustrates the co-cured joint 26 between the bonding surface 18 of a first component 14 and the bonding surface 18 of the second component 16. The first component 14 comprises a metal sheet and the second component 16 is comprised of composite material. The bonding surface of the first component has a plurality of undercut bosses formed therein. The co-cured joint 26 is formed by curing the composite material (to form the second component 16) and simultaneously bonding it to the bonding surface 18 of the first component 14. The composite material flows between and around the plurality of bosses improving the bond strength of the joint between the first and second components.

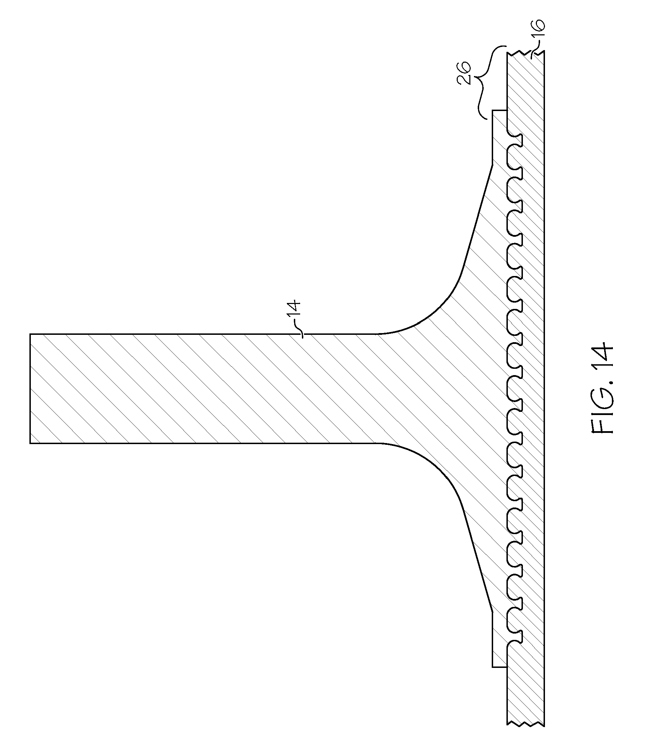

FIG. 14 also illustrates a co-cured joint similar to FIG. 13. In this embodiment, the first component 14 is in a form other than metal sheet form. In particular the first component is in a form at least substantially similar to that depicted in FIG. 12. However, rather than each of the features being implemented as openings as in FIG. 12, each is implemented as bosses. It will be appreciated, however, that this is merely exemplary of any one of numerous forms.

FIG. 15 illustrates the composite airfoil having a protective metal leading edge 25 formed by curing the composite material of the composite airfoil (to form the second component 16) while simultaneously bonding it to the first and second bonding surfaces 18 of the metal sheet (the first component) as shown in FIGS. 7
and 8. During curing, the composite material flows between and around the plurality of bosses formed in the first and second bonding surfaces 18 of the first component 14 to form the co-cured joint 26 having an improved bond strength between the bonding surfaces of the respective components.

From the foregoing, it is to be appreciated that the methods of the present invention provide a strong and durable joint with an improved bond strength that can withstand various loading and environmental factors to improve and increase the dynamic life of the joint and the bonded assembly. As less overlapping material is needed to form a strong and durable bond, the size of the components and the amount of component material needed to form a strong and durable joint may be reduced to decrease the weight and costs of the components and the bonded assembly.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method for improving the bond strength of a joint between bonding surfaces of a first and a second component, comprising the steps of:
providing a first component having a bonding surface adapted to be bonded to a bonding surface of a second component, at least one of the bonding surfaces including a plurality of features; and
bonding the bonding surfaces together to form a joint between the bonding surfaces;
wherein the step of bonding comprises forming a chemical and mechanical bond between the bonding surfaces with the plurality of features forming the mechanical bond.

2. The method of claim 1, wherein the plurality of features comprise at least one of a plurality of protrusions, openings, or recesses, or a combination thereof.

3. The method of claim 2, wherein the plurality of features have size dimensions within about two orders of magnitude of the bonding layer thickness.

4. The method of claim 3, wherein the plurality of features further comprise at least one undercut portion on at least one of the plurality of features.

5. The method of claim 1, wherein the step of bonding comprises the step of depositing bonding material between the bonding surfaces and pressing the bonding surfaces together to form a bonding material layer between the bonding surfaces.

6. The method of claim 5, wherein the step of depositing bonding material comprises depositing at least one of an adhesive material, a metallic bond material, or a ceramic bond material, or a combination thereof.

7. The method of claim 1, wherein the step of bonding the bonding surfaces together comprises:
depositing a fiber-reinforced composite material over at least the bonding surface of the first component to form the second component comprised of the fiber-reinforced composite material; and
curing the fiber-reinforced composite material to form a co-cured joint having improved bond strength with at least a portion of the fiber-reinforced composite material cured between the bonding surfaces.

8. The method of claim 7, wherein the first component comprises a metal sheet having two bonding surfaces and the second component comprises a composite airfoil, and the step of bonding comprises forming a bond between the two bonding surfaces of the metal sheet and the bonding surface of the composite airfoil to form a metallic leading edge on the composite airfoil.

9. A bonded assembly (10), comprising:
a first component (14) having a bonding surface (18);
a second component (16) having a bonding surface (18) bonded to the bonding surface of the first component, at least one of the first or second components, or both, having a plurality of features (20a and 20b) formed in the respective bonding surface.

10. The bonded assembly (10) of claim 9, further comprising a bonding material layer (24) between the bonding surfaces of the first and second components to form a chemical and mechanical bond between the first and second components.
